(19) Europäisches Patentamt
European Patent Office
Office européen des brevets

(11) **EP 3 451 030 B1**

(12) **EUROPEAN PATENT SPECIFICATION**

(45) Date of publication and mention
of the grant of the patent:
**09.12.2020 Bulletin 2020/50**

(51) Int Cl.:
***G02B 5/124*** *(2006.01)*     ***B32B 7/02*** *(2019.01)*
***E01F 9/524*** *(2016.01)*     *G02B 5/12* *(2006.01)*

(21) Application number: **17789525.7**

(22) Date of filing: **25.04.2017**

(86) International application number:
**PCT/JP2017/016363**

(87) International publication number:
**WO 2017/188243 (02.11.2017 Gazette 2017/44)**

(54) **RETROREFLECTIVE SHEET**

RÜCKSTRAHLENDE FOLIE

FEUILLE RÉTRORÉFLÉCHISSANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2016 JP 2016091567**

(43) Date of publication of application:
**06.03.2019 Bulletin 2019/10**

(73) Proprietor: **Nippon Carbide Industries Co., Inc.
Tokyo 108-8466 (JP)**

(72) Inventors:
• **SHIOMI, Toshiaki
Namerikawa-shi
Toyama 936-8555 (JP)**
• **JIANG, Chenyang
Namerikawa-shi
Toyama 936-8555 (JP)**

(74) Representative: **Hoffmann Eitle
Patent- und Rechtsanwälte PartmbB
Arabellastraße 30
81925 München (DE)**

(56) References cited:
**WO-A1-96/08737      WO-A1-2015/137217
JP-A- H06 250 006      JP-A- H06 347 621
JP-A- H06 347 621      JP-A- 2008 249 962**

**Description**

Technical Field

The present invention relates to a retroreflective sheeting.

Background Art

Retroreflective sheetings have the properties that can reflect incident light to the light source side. Since the retroreflective sheeting has such properties, the retroreflective sheeting is used for the purpose, for example, of easily seeing targets, such as printed materials, when light illuminates the targets at nighttime and at dark places. Examples of the retroreflective sheeting that is used include traffic signs, guide signs, vehicle number plates, advertising signs, pole cones, and delineators.

As such a retroreflective sheeting, Patent Literature 1 below, for example, discloses a retroreflective sheeting including an optically transparent layer having retroreflective elements and a resin back face layer formed with a large number of cavities smaller than the retroreflective elements. The cavities are formed on the surface of the resin back face layer on the side of the surface of the optically transparent layer where the retroreflective elements are formed. In the retroreflective sheeting, a low refractive index gas is contained in voids formed between the cavities formed on the resin back face layer and the retroreflective elements. With the refractive index difference between the low refractive index gas and the retroreflective element, light that has been entered from the optically transparent layer side and has reached the interface between the retroreflective elements and the voids can be reflected to the optically transparent layer side.

[Patent Literature 1] JP 3123693 B2

Summary of Invention

Since the retroreflective sheeting described in Patent Literature 1 uses no metal deposited film, its lightness can be improved. The retroreflective sheeting excellent in lightness can give printed parts prominence when used for printed materials, such as vehicle number plates. However, when a pressure is applied to the retroreflective sheeting disclosed in Patent Literature 1 in the thickness direction by being bent or embossed, for example, the voids formed between the retroreflective elements and the cavities sometimes collapse. When the voids collapse as described above, the retroreflectivity is reduced. Therefore, when the retroreflective sheeting disclosed in Patent Literature 1 is used for bent or embossed printed materials, the retroreflectivity is sometimes degraded, compared with the case in which the retroreflective sheeting is used for flat materials.

Therefore, the present invention is to provide a retroreflective sheeting that suppresses the degradation of its retroreflectivity even though a pressure is applied in the thickness direction.

To solve the problem, a retroreflective sheeting of the present invention includes: a retroreflective layer having a plurality of retroreflective elements on a first face; a back face layer provided opposite to a face of the retroreflective layer on the retroreflective element side, the back face layer having an attachment portion attached to the retroreflective elements; a plurality of particles arranged between the retroreflective elements and the back face layer; and a void formed between the retroreflective elements and the plurality of particles.

In the retroreflective sheeting, the plurality of particles is fixed as the particles are sandwiched between the retroreflective elements and the back face layer. The voids are formed between the particles and the retroreflective elements, and a gas, such as air, is contained in the voids. With the refractive index difference between the gas and the retroreflective elements, light entered from the retroreflective layer side can be reflected off the interface between the retroreflective elements and the voids to the retroreflective layer side. In the retroreflective sheeting, even though a pressure is applied in the thickness direction, the voids are supported by the particles, and this suppresses the collapse of the voids. Therefore, in the retroreflective sheeting, even in the case in which a pressure is applied in the thickness direction, the deterioration of retroreflectivity is suppressed.

In the retroreflective sheeting, an average particle diameter da of the particles can be a height h of the retroreflective elements or more.

The average particle diameter da of the particles is the height h of the retroreflective elements or more. Thus, the voids are easily formed between the retroreflective elements and the particles, and hence the retroreflectivity of the retroreflective sheeting is easily improved.

In the retroreflective sheeting, the average particle diameter da of the particles can be made smaller than the height h of the retroreflective elements.

The average particle diameter da of the particles is smaller than the height h of the retroreflective elements. Thus, the area of the attachment portion of the retroreflective elements to the back face layer is easily increased, and hence the adhesive strength between the retroreflective elements and the back face layer is easily improved.

In the retroreflective sheeting, it is preferable that a ratio da/h of the average particle diameter da of the particles to the height h of the retroreflective elements is 0.40 or more and 1.25 or less.

In the present invention, "the average particle diameter" means the diameter measured as below. First, cross sectional pictures are captured at given ten places on the retroreflective sheeting with a microscope (VHX-1000, produced by Keyence Corporation). Subsequently, the particle diameters of 100 particles on the captured cross sectional pictures at ten places are measured. The total length is divided by 100 to calculate the mean value. The mean value is the average particle diameter.

The ratio da/h of the average particle diameter da of the particles to the height h of the retroreflective elements is 0.40 or more and 1.25 or less. Thus, the voids in a proper size are formed between the retroreflective elements and the particles, and hence the retroreflectivity of the retroreflective sheeting is easily improved. The ratio da/h is 0.40 or more and 1.25 or less. Thus, the area of the attachment portion of the retroreflective elements to the back face layer is easily increased, and hence the adhesive strength between the retroreflective elements and the back face layer is easily improved.

In the retroreflective sheeting, it is preferable that a ratio np/nv of a number np of the plurality of particles to a number nv of valleys formed between the retroreflective elements adjacent to each other is 0.50 or more and 5.00 or less.

The ratio np/nv of the number np of the particles to the number nv of the valleys formed between the retroreflective elements adjacent to each other is set to 0.50 or more and 5.00 or less. Thus, the voids in a proper size are formed between the retroreflective elements and the particles, and hence the retroreflectivity of the retroreflective sheeting is easily improved. The ratio np/nv is 0.50 or more and 5.00 or less. Thus, the area of the attachment portion of the retroreflective elements to the back face layer is easily increased, and hence the adhesive strength between the retroreflective elements and the back face layer is easily improved.

In the retroreflective sheeting, it is preferable that the plurality of particles has a spherical shape.

The particles have a spherical shape. Thus, the voids in a proper size are easily formed between the retroreflective elements and the particles, and hence the retroreflectivity of the retroreflective sheeting is easily improved.

In the retroreflective sheeting, it is preferable that the back face layer includes a pigment.

The back face layer includes a predetermined pigment, and hence the lightness and chroma of the retroreflective sheeting can be easily improved suitable for the applications of the retroreflective sheeting.

In the retroreflective sheeting, it is preferable that the back face layer is formed of an adhesive.

The back face layer is formed of an adhesive. Thus, the retroreflective sheeting can be attached to a target with no adhesive layer. Consequently, the layer configuration of the retroreflective sheeting can be made simple, and hence an increase in the production cost of the retroreflective sheeting can be suppressed.

As described above, according to the present invention, there is provided a retroreflective sheeting that suppresses the degradation of its retroreflectivity even though a pressure is applied in the thickness direction.

Brief Description of Drawings

FIG. 1 is a diagram schematically illustrating a cross section of a retroreflective sheeting according to an embodiment in the thickness direction.
FIG. 2 is a diagram of the retroreflective sheeting illustrated in FIG. 1 that is partially enlarged.
FIG. 3 is a graph of the relationship between the retroreflective properties and the lightness for a ratio np/nv of the number of particles to valleys.
FIG. 4 is a graph of the relationship between the retroreflective properties and the lightness for a ratio da/h of an average particle diameter to the height of an element.

Description of Embodiments

In the following, a preferred embodiment of a retroreflective sheeting according to the present invention will be described in detail with reference to the drawings.

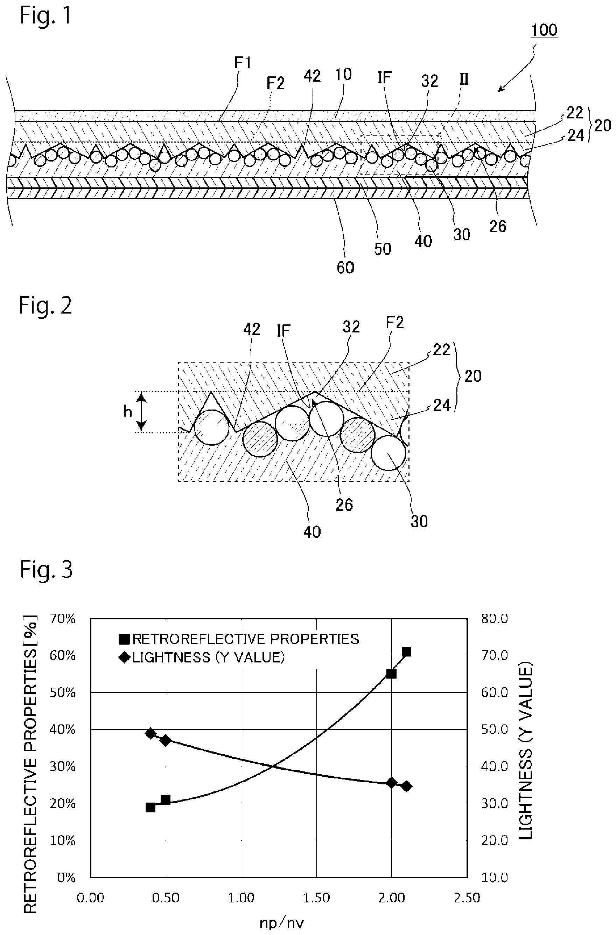

FIG. 1 is a diagram schematically illustrating a cross section of a retroreflective sheeting according to an embodiment in the thickness direction. FIG. 2 is a diagram of the retroreflective sheeting illustrated in FIG. 1 showing portion II that is enlarged. Note that, in FIGS. 1 and 2, for easy understanding, the sizes of components are not depicted accurately because the components are sometimes exaggerated, for example. In FIGS. 1 and 2, components having similar configurations are designated only one reference sign, and repeated reference signs are omitted.

A retroreflective sheeting 100 illustrated in FIG. 1 includes a surface protective layer 10, a retroreflective layer 20, a plurality of particles 30, a back face layer 40, an adhesive layer 50, and a releasable sheet 60. In the following, these components will be described in detail.

The surface protective layer 10 is a layer that protects a face F1 of the retroreflective layer 20 provided on the observer side when the retroreflective sheeting 100 is used. The surface protective layer 10 is the outermost layer of the retroreflective sheeting 100 when the retroreflective sheeting 100 is used. From the viewpoint of providing the retroreflective sheeting 100 with excellent retroreflectivity, the surface protective layer 10 is preferably a transparent resin layer. The total light transmittance of the surface protective layer 10 is 80% or more, for example. Examples of materials that configure the surface protective layer 10 include acrylic resins, alkyd resins, fluororesins, vinyl chloride resins, polyester resins, urethane resins, and polycarbonate resins. These resins may be used alone, or may be used in mixture. From the viewpoint of providing the surface protective layer 10 with weather resistance or processability, acrylic resins, polyester resins, and vinyl chloride resins are preferable. In consideration of the coating suitability and dispersibility of coloring agents in coloring, acrylic resins are preferable. Note that, the surface protective layer 10 can be appropriately doped with various additives, such as ultraviolet absorption agents, light stabilizers, heat stabilizers, plasticizers, crosslinkers, antioxidants, fungicides, and coloring agents in the range that does not considerably degrade transparency.

The retroreflective layer 20 includes a plate-shaped holding portion 22 and a plurality of retroreflective elements 24. The first face F1 of the holding portion 22 is covered with the surface protective layer 10. A second face F2 of the holding portion 22 is provided with the retroreflective elements 24. The retroreflective elements 24 are non-limiting specifically as long as the retroreflective elements 24 have a reflective surface suitable for retroreflecting incident light. For example, in the case in which the retroreflective elements 24 having a polyhedron, such as a triangular pyramid, or a so-called cube corner shape are arranged in closest packing, this arrangement is preferable because retroreflectivity is excellent.

From the viewpoint of providing the retroreflective sheeting 100 with excellent retroreflectivity, the retroreflective layer 20 is preferably a transparent resin layer. Examples of materials that configure the retroreflective layer 20 include acrylic resins, urethane resins, fluororesins, polyester resins, vinyl chloride resins, polycarbonate resins, polyarylate resins, silicone resins, polyolefin resins, and ionomer resins. These resins may be used alone, or may be used in mixture. From the viewpoint of improving the transparency and weather resistance, for example, of the retroreflective layer 20, the retroreflective layer 20 is preferably formed of an acrylic resin, urethane resin, fluororesin, and polycarbonate resin, for example. Note that, the retroreflective layer 20 can be appropriately doped with various additives, such as ultraviolet absorption agents, light stabilizers, heat stabilizers, plasticizers, crosslinkers, antioxidants, fungicides, and coloring agents in the range that does not considerably degrade transparency.

The back face layer 40 is a layer that is provided opposite to the face of the retroreflective layer 20 on the retroreflective elements 24 side and has an attachment portion 42 attached to the retroreflective elements 24. The back face layer 40 is attached to the retroreflective elements 24 on the attachment portion 42, and sandwiches and fixes the particles 30 between the back face layer 40 and the retroreflective elements 24 in the portions other than the attachment portion 42.

Examples of materials that configure the back face layer 40 include acrylic resins, urethane resins, fluororesins, polyester resins, vinyl chloride resins, polycarbonate resins, polyarylate resins, silicone resins, polyolefin resins, and ionomer resins. These resins may be used alone, or may be used in mixture. From the viewpoint of improving the transparency and weather resistance, for example, of the back face layer 40, the back face layer 40 is preferably formed of an acrylic resin, urethane resin, fluororesin, and polycarbonate resin, for example. Note that, the back face layer 40 can be appropriately doped with various additives, such as ultraviolet absorption agents, light stabilizers, heat stabilizers, plasticizers, crosslinkers, antioxidants, fungicides, and coloring agents.

The back face layer 40 includes a predetermined pigment, and hence the lightness and chroma of the retroreflective sheeting 100 can be easily improved. For example, the back face layer 40 includes a white pigment, such as titanium oxide, and hence the lightness of the retroreflective sheeting 100 can be improved.

The back face layer 40 may include a coloring agent other than the white pigment, such as titanium oxide, described above. Examples of the coloring agent that can be used include an inorganic pigment, organic pigment, organic dyestuff, and pearl pigment. The back face layer 40 may use one kind of these coloring agents alone or may use two kinds or more in combination.

Examples of the inorganic pigment other than titanium oxide can include carbonic acid calcium, barium sulfate, zinc oxidize, zinc sulfide, carbon black, cadmium red, molybdenum red, ultramarine, cobalt blue, red iron oxide, chromium oxide, iron black, cadmium yellow, titanium yellow, nickel titanium yellow, chromium titanium yellow, chrome yellow, yellow iron oxide, chromium orange, cadmium orange, gold powder, silver powder, copper powder, aluminum powder, and bronze powder. Examples of the organic pigment and the organic dyestuff can include organic compounds, such as anthraquinones, phthalocyanines, quinacridons, isoindolinones, dioxazines, quinophthalones, quinoimines, perylenes, perinones, azos, quinolines, methines, indigos, and naphthol imides. Examples of the pearl pigment can include titanium oxide coated mica, bismuth chloride oxide, fish scale powder, and basic lead carbonate.

In the case in which the previously existing retroreflective sheeting is colored, the retroreflective layer is doped with a coloring agent, or the surface of the retroreflective layer to which light is entered is provided with a printed layer or a colored layer. In the previously existing retroreflective sheeting, the coloring agent or printing scatters light or prevents light from being entered to the retroreflective layer. This hampers the reflection of light at the retroreflective layer, resulting in the deterioration of retroreflectivity. In the case in which deep coloring agents, such as red, blue, and green, are used, this tendency is specifically noticeable. On the other hand, in the retroreflective sheeting 100 according to the embodiment, in the case in which, for example, the retroreflective layer 20 is made transparent and the back face layer 40 is doped with a coloring agent as described above, the factors that prevent light from being entered to the retroreflective layer 20 or light from being reflected off the retroreflective layer 20 are decreased, compared with the previously existing retroreflective sheeting. Thus, the degradation of retroreflectivity can be suppressed.

The particles 30 are arranged between the retroreflective elements 24 and the back face layer 40. Since the particles 30 are arranged between the retroreflective elements 24 and the back face layer 40, the positions of the particles 30 are fixed as the particles 30 are sandwiched between the retroreflective elements 24 and the back face layer 40, and voids 32 are formed between the particles 30 and the retroreflective elements 24. The shape, size, and number of the particles 30 are not limited specifically as long as the attachment portion 42 is provided between the retroreflective elements 24 and the back face layer 40 and the voids 32 are formed between the particles 30 and the retroreflective elements 24.

An example of the particle 30 that can be used includes a glass bead. Note that, from the viewpoint of easily arranging the particles 30 with the particles 30 uniformly dispersed between the retroreflective elements 24 and the back face layer 40, the particle 30 is preferably a glass bead that is not easily charged. Examples of particles that can be used as the particles 30 other than glass beads include inorganic particles including talc, titanium oxide, carbonic acid calcium, silica, barium sulfate, mica, and wollastonite and organic particles including acrylic resins, epoxy resins, polyimide resins, PPS (polyphenylene sulfide) resins, silicone resins, melamine resins, and fluororesins. The particles 30 may be colored. The colored particles 30 can improve the lightness and chroma of the retroreflective sheeting 100.

Hollow particles may be used as the particles 30. The term "hollow particle" means a particle having a hollow formed in the inside of its shell. Note that, the inside of the hollow may be vacuum, or may be filled with a gas.

The adhesive layer 50 is a layer that is provided on the back face layer 40 on the opposite side to the retroreflective layer 20 and attached to a product to which the retroreflective sheeting 100 is mounted when used.

Examples of materials that configure the adhesive layer 50 can be appropriately selected from adhesives, such as pressure sensitive adhesives, thermosensitive adhesives, and cross-linking adhesives. Examples of the pressure sensitive adhesives include polyacrylic ester pressure sensitive adhesives, silicone resin pressure sensitive adhesives, and rubber pressure sensitive adhesives; the polyacrylic ester pressure sensitive adhesives are obtained, for example, by copolymerization of acrylic acid or vinyl acetate with acrylic acid ester, such as butylacrylate, 2-ethyl hexyl acrylate, isooctyl acrylate, and nonyl acrylate. Examples of the thermosensitive adhesives include acrylic resins, polyester resins, and epoxy resins. From the viewpoint of providing the adhesive layer 50 with excellent weather resistance and the adhesion properties, acrylic resins or silicone resins are preferably used.

The adhesive layer 50 includes a predetermined pigment, and hence the lightness and chroma of the retroreflective sheeting 100 can be easily improved suitable for the applications of the retroreflective sheeting 100. For example, the adhesive layer 50 includes a white pigment, such as titanium oxide, and hence the lightness of the retroreflective sheeting 100 can be improved.

The releasable sheet 60 is a layer that is provided on the adhesive layer 50 on the opposite side to the back face layer 40. The releasable sheet 60 covers the adhesive layer 50 before the retroreflective sheeting 100 is used, and this prevents dust and dirt from attaching to the adhesive layer 50 or prevents the adhesive layer 50 from being attached to an undesired place. On the other hand, when the retroreflective sheeting 100 is used, the releasable sheet 60 is peeled off from the adhesive layer 50.

The releasable sheet 60 can be configured of a polyester film or configured of a polypropylene film, for example, which are non-limiting.

The retroreflective sheeting 100 described above can be manufactured as below, which is an example. First, a stacked sheet having a stack of the releasable sheet 60, the adhesive layer 50, and the back face layer 40 in this order is prepared. The particles 30 are almost uniformly sprinkled on the surface on the back face layer 40 side of the stacked sheet with the back face layer 40 provided with viscosity. After that, the retroreflective layer 20 is laid on the back face layer 40, and the retroreflective elements 24 are attached to the back face layer 40. The surface protective layer 10 may be formed before the retroreflective layer 20 is laid on the back face layer 40, or may be formed after the retroreflective layer 20 is laid on the back face layer 40. Methods of forming the layers are not limited specifically.

However, a method of manufacturing the retroreflective sheeting 100 is not limited to the methods described above. The retroreflective sheeting 100 can also be manufactured by a method with which the particles 30 are sprinkled on the face on which the retroreflective elements 24 of the retroreflective layer 20 are formed, and then the back face layer 40, the adhesive layer 50, and the releasable sheet 60 are stacked in this order. In this case, the back face layer 40, the adhesive layer 50, and the releasable sheet 60 may be stacked before the retroreflective elements 24 are attached to the back face layer 40, or may be stacked in this order after the retroreflective elements 24 are attached to the back face layer 40. Also in this case, the surface protective layer 10 may be formed before the retroreflective layer 20 is laid on the back face layer 40, or may be formed after the retroreflective layer 20 is laid on the back face layer 40.

In the retroreflective sheeting 100 described above, the positions of the particles 30 are fixed as the particles 30 are sandwiched between the retroreflective elements 24 and the back face layer 40. The voids 32 are formed between the particles 30 and the retroreflective elements 24, and a gas, such as air, is contained in the voids 32. With the refractive index difference between the gas and the retroreflective elements 24, the retroreflective layer 20 can reflect light entered from the holding portion 22 side off the interface IF between the retroreflective elements 24 and the voids 32, and can retroreflect the incident light. In the retroreflective sheeting 100, the voids 32 are formed by the particles 30 that are sandwiched between the retroreflective elements 24 and the back face layer 40. Thus, even though a pressure is applied in the thickness direction, the voids 32 are supported by the particles 30, and this suppresses the collapse of the voids 32. Therefore, in the retroreflective sheeting 100, even in the case in which a pressure is applied in the thickness direction, the deterioration of retroreflectivity is suppressed.

In the retroreflective sheeting 100, the voids 32 that contribute to retroreflection are formed with the particles 30. Thus, the size, shape, number, and distribution of the particles 30 are adjusted, and this easily controls the size and distribution of the voids 32 on the entire retroreflective sheeting 100. Therefore, in the retroreflective sheeting 100, the retroreflectivity of the entire retroreflective sheeting 100 is easily controlled, such as providing nearly uniform retroreflectivity and controlling the degree of the retroreflectivity of the retroreflective sheeting 100.

Here, in the case in which an average particle diameter da of the particles 30 is a height h of the retroreflective elements 24 or more, the voids 32 are easily formed between the retroreflective elements 24 and the particles 30, and hence the retroreflectivity of the retroreflective sheeting 100 is easily improved. On the other hand, in the case in which the average particle diameter da of the particles 30 is smaller than the height h of the retroreflective elements 24, the area of the attachment portion 42 between the retroreflective elements 24 and the back face layer 40 is easily increased, and hence the adhesive strength of the retroreflective elements 24 to the back face layer 40 is easily improved. In the case in which a ratio da/h of the average particle diameter da of the particles 30 to the height h of the retroreflective elements 24 is 0.40 or more and 1.25 or less, the voids 32 in a proper size are formed between the retroreflective elements 24 and the particles 30, and hence the retroreflectivity of the retroreflective sheeting 100 is easily improved. Also in this case, the area of the attachment portion 42 between the retroreflective elements 24 and the back face layer 40 is easily increased, and hence the adhesive strength of the retroreflective elements 24 to the back face layer 40 is easily improved.

In the case in which a ratio np/nv of a number np of the particles 30 to a number nv of the valleys 26 formed between the retroreflective elements 24 adjacent to each other is 0.50 or more and 5.00 or less, the voids 32 in a proper size are formed between the retroreflective elements 24 and the particles 30, and hence the retroreflectivity of the retroreflective sheeting 100 is easily improved. Since the ratio np/nv is 0.50 or more and 5.00 or less, the area of the attachment portion 42 between the retroreflective elements 24 and the back face layer 40 is easily increased, and hence the adhesive strength of the retroreflective elements 24 to the back face layer 40 is easily improved. From these viewpoints, the ratio np/nv is more preferably 0.50 or more and 2.00 or less.

Since the particles 30 have a spherical shape, the voids 32 in a proper size are easily formed between the retroreflective elements 24 and the particles 30, and hence the retroreflectivity of the retroreflective sheeting 100 is easily improved.

In the case in which the particles 30 are hollow particles as described above, the voids 32 are formed between the retroreflective elements 24 and the particles 30 as well as the particles 30 themselves have a hollow with a refractive index lower than the refractive index of the retroreflective elements 24. That is, the volume of a space having a refractive index lower than the refractive index of the retroreflective elements 24 can be increased between the retroreflective elements 24 and the back face layer 40. Thus, the retroreflectivity of the retroreflective sheeting 100 can be further improved.

From the viewpoint of providing the retroreflective elements 24 with efficient retroreflection, the refractive index of the material configuring the retroreflective elements 24 is preferably higher than the refractive index of the material configuring the back face layer 40. Since the refractive index of the material configuring the retroreflective elements 24 is higher than the refractive index of the material configuring the back face layer 40, light can be reflected off the attachment portion 42 as well. From the similar viewpoint, the refractive index of the material configuring the particles 30 is preferably higher than the refractive index of the material configuring the back face layer 40. Since the refractive index of the material configuring the particles 30 is higher than the refractive index of the material configuring the back face layer 40, light entered from the retroreflective elements 24 to the particles 30 can be reflected off the interface between the particles 30 and the back face layer 40 to the retroreflective layer 20 side.

As described above, the present invention is described taking the preferred embodiment as an example. However, the present invention is not limited to this embodiment.

For example, in the foregoing embodiment, the description is made taking an example that the surface protective layer 10 is included. However, the surface protective layer 10 is no essential component.

In the foregoing embodiment, the description is made taking an example that the adhesive layer 50 is included. However, the adhesive layer 50 is no essential component. For example, in the case in which the back face layer 40 is formed of an adhesive, the retroreflective sheeting can be attached to a target with no adhesive layer 50. Thus, the layer configuration of the retroreflective sheeting can be made simple, and hence an increase in the production cost of the retroreflective sheeting can be suppressed.

[Examples]

In the following, the present invention will be described more in detail with examples and a comparative example. However, the present invention is not limited to the examples below.

<Preparation of Retroreflective Sheetings>

Retroreflective sheetings of the examples were prepared as below.

(Example 1)

A retroreflective layer (made of a polycarbonate resin in a thickness of 200 $\mu$m) was prepared in which retroreflective elements in a triangular pyramid cube corner shape having a height of 80 $\mu$m were provided on a first face and a second face was covered with a surface protective layer (made of an acrylic resin in a thickness of 50 $\mu$m). A stacked sheet was prepared. The sheet had a layer of a releasable sheet (made of a cast polypropylene film in a thickness of 75 $\mu$m), an adhesive layer (made of an acrylic resin in a thickness of 45 $\mu$m), and a back face layer (made of an acrylic resin in a thickness of 80 $\mu$m) in this order. After spherical glass beads having an average particle diameter of 30 $\mu$m were sprinkled almost uniformly on the face of the back face layer of the stacked sheet, the back face layer was attached to the retroreflective elements, and a retroreflective sheeting in a thickness of 420 $\mu$m was prepared. In the preparation, the ratio np/nv of the number np of the particles to the number nv of the valleys formed between the retroreflective elements adjacent to each other was set to 1.00. The ratio da/h of the average particle diameter da of the particles to the height h of the retroreflective elements was set to 0.38. Note that, all the layers were colorless and transparent.

(Example 2)

A retroreflective sheeting was prepared similarly to example 1 except that the average particle diameter da of the particles was set to 35 $\mu$m and the ratio da/h of the average particle diameter da of the particles to the height h of the retroreflective elements was set to 0.44.

(Example 3)

A retroreflective sheeting was prepared similarly to example 1 except that the average particle diameter da of the particles was set to 45 $\mu$m and the ratio da/h of the average particle diameter da of the particles to the height h of the retroreflective elements was set to 0.56.

(Example 4)

A retroreflective sheeting was prepared similarly to example 1 except that the average particle diameter da of the particles was set to 60 $\mu$m and the ratio da/h of the average particle diameter da of the particles to the height h of the retroreflective elements was set to 0.75.

(Example 5)

A retroreflective sheeting was prepared similarly to example 1 except that the average particle diameter da of the particles was set to 100 $\mu$m and the ratio da/h of the average particle diameter da of the particles to the height h of the retroreflective elements was set to 1.25.

(Example 6)

A retroreflective sheeting was prepared similarly to example 1 except that the average particle diameter da of the particles was set to 110 μm and the ratio da/h of the average particle diameter da of the particles to the height h of the retroreflective elements was set to 1.38.

(Example 7)

A retroreflective sheeting was prepared similarly to example 3 except that the ratio np/nv of the number np of the particles to the number nv of the valleys formed between the retroreflective elements adjacent to each other was set to 0.40.

(Example 8)

A retroreflective sheeting was prepared similarly to example 3 except that the ratio np/nv of the number np of the particles to the number nv of the valleys formed between the retroreflective elements adjacent to each other was set to 0.50.

(Example 9)

A retroreflective sheeting was prepared similarly to example 3 except that the ratio np/nv of the number np of the particles to the number nv of the valleys formed between the retroreflective elements adjacent to each other was set to 2.00.

(Example 10)

A retroreflective sheeting was prepared similarly to example 3 except that the ratio np/nv of the number np of the particles to the number nv of the valleys formed between the retroreflective elements adjacent to each other was set to 2.10.

(Example 11)

A retroreflective sheeting was prepared similarly to example 1 except that the ratio np/nv of the number np of the particles to the number nv of the valleys formed between the retroreflective elements adjacent to each other was set to 5.00.

(Example 12)

A retroreflective sheeting was prepared similarly to example 3 except that a plate-shaped talc was used as the particles.

(Example 13)

A retroreflective sheeting was prepared similarly to example 3 except that a white pigment (titanium oxide particles having an average particle diameter of 0.20 μm) was contained in the back face layer by 15 percent by weight.

(Comparative Example 1)

A retroreflective sheeting was prepared similarly to example 1 except that no particles were used. That is, in the retroreflective sheeting according to comparative example 1, the retroreflective elements of the retroreflective layer are entirely in intimate contact with the back face layer.

<Evaluation Result>

The retroreflective sheetings thus prepared were evaluated as described below. The preparation conditions and the evaluation result of the retroreflective sheetings are shown in Table 1 below.

Table 1

| | h [μm] | Particle | | | Distribution | Dimension Ratio | Color of Back Face Layer | Evaluation Result | | |
| --- | --- | --- | --- | --- | --- | --- | --- | --- | --- | --- |
| | | Material | Shape | Average Particle Diameter [μm] | np/nv | da/h | | Lightness (Y value) | Retroreflective Prope rties [%] | Layer-to-layer Adhesion |
| Example 1 | 80 | Glass | Spherical shape | 30 | 1.00 | 0.38 | Colorless and transparent | 48.2 | 9% | Excellent |
| Example 2 | 80 | Glass | Spherical shape | 35 | 1.00 | 0.44 | Colorless and transparent | 44.8 | 21% | Excellent |
| Example 3 | 80 | Glass | Spherical shape | 45 | 1.00 | 0.56 | Colorless and transparent | 42.9 | 30% | Excellent |
| Example 4 | 80 | Glass | Spherical shape | 60 | 1.00 | 0.75 | Colorless and transparent | 40.1 | 39% | Excellent |
| Example 5 | 80 | Glass | Spherical shape | 100 | 1.00 | 1.25 | Colorless and transparent | 35.2 | 58% | Excellent |
| Example 6 | 80 | Glass | Spherical shape | 110 | 1.00 | 1.38 | Colorless and transparent | 34.4 | 63% | Fair |
| Example 7 | 80 | Glass | Spherical shape | 45 | 0.40 | 0.56 | Colorless and transparent | 48.9 | 19% | Excellent |
| Example 8 | 80 | Glass | Spherical shape | 45 | 0.50 | 0.56 | Colorless and transparent | 47.0 | 21% | Excellent |
| Example 9 | 80 | Glass | Spherical shape | 45 | 2.00 | 0.56 | Colorless and transparent | 35.7 | 55% | Excellent |

EP 3 451 030 B1

9

(continued)

| | h [$\mu$m] | Particle | | | Distribution | Dimension Ratio | Color of Back Face Layer | Evaluation Result | | |
|---|---|---|---|---|---|---|---|---|---|---|
| | | Material | Shape | Average Particle Diameter [$\mu$ m] | np/nv | da/h | | Lightness (Y value) | Retroreflective Prope rties [%] | Layer-to-layer Adhesion |
| Example 10 | 80 | Glass | Spherical shape | 45 | 2.10 | 0.56 | Colorless and transparent | 34.7 | 61% | Fair |
| Example 11 | 80 | Glass | Spherical shape | 30 | 5.00 | 0.38 | Colorless and transparent | 34.5 | 52% | Fair |
| Example 12 | 80 | Talc | Plate shape | 45 | 1.00 | 0.56 | Colorless and transparent | 47.2 | 6% | Excellent |
| Example 13 | 80 | Glass | Spherical shape | 45 | 1.00 | 0.56 | White | 54.5 | 26% | Excellent |
| Comparative Example 1 | 80 | - | - | - | - | - | Colorless and transparent | 27.5 | <1% | Excellent |

(Lightness (Y Value))

As a color measurement device, a portable spectrocolorimeter "MiniScan EZ (registered trademark)" produced by Hunter Associates Laboratory, Inc. was used, and the lightness of the retroreflective sheetings was evaluated. The retroreflective sheeting was cut in a 100-by-100-millimeter sheet. On one retroreflective sheeting, the Y value was measured at five points in conformance with JIS Z 9117. The measured values at the five points were expressed by an XYZ color specification system. The mean value of the Y values was taken as the lightness of the retroreflective sheeting.
The result shown in Table 1 reveals that in the retroreflective sheeting according to comparative example 1 with no void, the lightness was low because a large quantity of light was transmitted. All the retroreflective sheetings of examples 1 to 13 had lightness higher than the lightness of the retroreflective sheeting according to comparative example 1. Note that, in example 13, the back face layer that had been colored white enabled the improvement of lightness.

(Retroreflective Properties [%])

As a retroreflective property measurement device, "Model 920" produced by Gamma Scientific Inc. was used, and the retroreflective properties of the retroreflective sheetings were evaluated. First, only a retroreflective layer cut in a 100-by-100-millimeter sheet without stacking another layer was prepared. Only on the retroreflective layer, the retroreflection coefficient was measured at five points in conformance with JIS Z 9117 at an observation angle of 0.2 degrees and an entrance angle of five degrees. The mean value of the measured values was taken as the retroreflection coefficient of the retroreflective layer alone. That is, the retroreflection coefficient of the retroreflective layer alone means a retroreflection coefficient in the case in which the face of the retroreflective layer on the retroreflective element side was air. Subsequently, on the retroreflective sheeting cut in a 100-by-100-millimeter sheet, the retroreflection coefficient was measured at five points in conformance with JIS Z 9117 at an observation angle of 0.2 degrees and an entrance angle of five degrees. The mean value of the measured values was taken as the retroreflection coefficient of the retroreflective sheeting. The retroreflective properties [%] were calculated based on the measured retroreflection coefficients using an equation below.

$$\texttt{The retroreflective properties [\%] = \{(the}$$
$$\texttt{retroreflection coefficient of the retroreflective}$$
$$\texttt{sheeting)/(the retroreflection coefficient of the}$$
$$\texttt{retroreflective layer alone)\} × 100}$$

It can be said that the retroreflectivity is more excellent as the retroreflective properties are higher. Table 1 reveals that all the retroreflective sheetings of examples 1 to 13 had the retroreflective properties higher than the retroreflective properties of the retroreflective sheeting according to comparative example 1. This can be considered that voids were formed between the retroreflective elements and the particles and light was reflected off the interface between the retroreflective elements and the voids.

(Layer-to-Layer Adhesion)

The retroreflective sheeting was cut in a 75-by-70-millimeter sheet. The sheet was attached to an A5052P aluminum plate defined in JIS H 4000, and then a test sample was obtained. Subsequently, with a xenon lamp accelerated weathering tester (Ci65A) produced by Atlas Electric Devices Co., light was applied to the test sample for 1,000 hours under the conditions in which the application intensity was 550 W/m$^2$ at a wavelength of 300 to 800 nm and the black panel temperature was 63°C. After that, the appearance of the test sample was visually confirmed. In the case in which no abnormality was observed in the appearance, the layer-to-layer adhesion of the retroreflective sheeting was expressed by excellent. In the case in which the end portion of the retroreflective sheeting was peeled or warped, the layer-to-layer adhesion of the retroreflective sheeting was expressed by fair.
As revealed from Table 1, in the case in which the ratio np/nv of the number np of the particles to the number nv of the valleys formed between the retroreflective elements adjacent to each other or the ratio da/h of the average particle diameter da of the particles to the height h of the retroreflective elements was large, the layer-to-layer adhesion was prone to be slightly inferior.
Table 1 reveals the correlation of the lightness and the retroreflective properties with the ratio np/nv of the number np of the particles to the number nv of the valleys formed between the retroreflective elements adjacent to each other. FIG. 3 is a graph of the relationship of the retroreflective properties and the lightness with the ratio np/nv of the number of the particles to the valleys based on the evaluation result of examples 7 to 10. Table 1 and FIG. 3 reveal the effect that the ratio np/nv of the number np of the particles to the number nv of the valleys formed between the retroreflective elements adjacent to each other was approximately 0.50 or more and 5.00 or less, and hence the voids in a proper size are formed between the retroreflective elements and the particles and the retroreflective properties are easily improved as well as the adhesive strength of the retroreflective elements to the back face layer is easily improved.

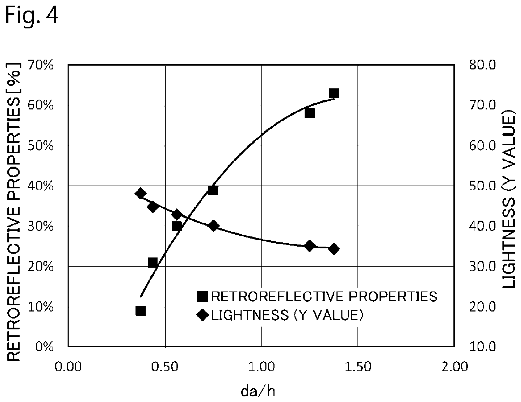

Table 1 reveals the correlation of the lightness and the retroreflective properties with the ratio da/h of the average particle diameter da of the particles to the height h of the retroreflective elements. FIG. 4 is a graph of the relationship of the retroreflective properties and the lightness with the ratio da/h of the average particle diameter to the height of the element based on the evaluation result of examples 1 to 6. Table 1 and FIG. 4 reveal the effect that the ratio da/h of the average particle diameter da of the particles to the height h of the retroreflective elements was 0.40 or more and 1.25 or less approximately, and hence the voids in a proper size are formed between the retroreflective elements and the particles and the retroreflective properties are easily improved as well as the adhesive strength of the retroreflective elements to the back face layer is easily improved.

Reference Signs List

| | |
|---|---|
| 10 | surface protective layer |
| 20 | retroreflective layer |
| 24 | retroreflective elements |
| 26 | valley |
| 30 | particles |
| 32 | void |
| 40 | back face layer |
| 42 | attachment portion |
| 50 | adhesive layer |
| 60 | releasable sheet |
| 100 | retroreflective sheeting |

**Claims**

1.  A retroreflective sheeting comprising:

    a retroreflective layer having a plurality of retroreflective elements on a first face;
    a back face layer provided opposite to a face of the retroreflective layer on the retroreflective element side, the back face layer having an attachment portion attached to the retroreflective elements;
    a plurality of particles arranged between the retroreflective elements and the back face layer; and **characterized in that**
    a void is formed between the retroreflective elements and the plurality of particles.

2.  The retroreflective sheeting according to claim 1, wherein
    an average particle diameter da of the particles is a height h of the retroreflective elements or more.

3.  The retroreflective sheeting according to claim 1, wherein
    an average particle diameter da of the particles is smaller than a height h of the retroreflective elements.

4.  The retroreflective sheeting according to any one of claims 1 to 3, wherein
    a ratio da/h of the average particle diameter da of the particles to the height h of the retroreflective elements is 0.40 or more and 1.25 or less.

5.  The retroreflective sheeting according to any one of claims 1 to 4, wherein
    a ratio np/nv of a number np of the plurality of particles to a number nv of valleys formed between the retroreflective elements adjacent to each other is 0.50 or more and 5.00 or less.

6.  The retroreflective sheeting according to any one of claims 1 to 5, wherein

the plurality of particles has a spherical shape.

**7.** The retroreflective sheeting according to any one of claims 1 to 6, wherein the back face layer includes a pigment.

**8.** The retroreflective sheeting according to any one of claims 1 to 7, wherein the back face layer is formed of an adhesive.

**Patentansprüche**

**1.** Rückstrahlende Folie, umfassend:

eine rückstrahlende Schicht, die eine Vielzahl von rückstrahlenden Elementen auf einer ersten Fläche aufweist;
eine Rückflächenschicht, die gegenüber einer Fläche der rückstrahlenden Schicht auf der Seite des rückstrahlenden Elements vorgesehen ist, wobei die Rückflächenschicht einen Befestigungsabschnitt aufweist, der an den rückstrahlenden Elementen befestigt ist;
eine Vielzahl von Teilchen, die zwischen den rückstrahlenden Elementen und der Rückflächenschicht angeordnet sind; und
**dadurch gekennzeichnet, dass** eine Lücke zwischen den rückstrahlenden Elementen und der Vielzahl von Teilchen gebildet ist.

**2.** Rückstrahlende Folie nach Anspruch 1, wobei ein durchschnittlicher Teilchendurchmesser da der Teilchen eine Höhe h der rückstrahlenden Elemente oder mehr ist.

**3.** Rückstrahlende Folie nach Anspruch 1, wobei ein durchschnittlicher Teilchendurchmesser da der Teilchen kleiner als eine Höhe h der rückstrahlenden Elemente ist.

**4.** Rückstrahlende Folie nach einem der Ansprüche 1 bis 3, wobei ein Verhältnis da/h des durchschnittlichen Teilchendurchmessers da der Teilchen zur Höhe h der rückstrahlenden Elemente 0,40 oder mehr und 1,25 oder weniger ist.

**5.** Rückstrahlende Folie nach einem der Ansprüche 1 bis 4, wobei ein Verhältnis np/nv einer Anzahl np der Vielzahl von Teilchen zu einer Anzahl nv von Tälern, die zwischen den rückstrahlenden Elementen aneinander angrenzend gebildet werden, 0,50 oder mehr und 5,00 oder weniger ist.

**6.** Rückstrahlende Folie nach einem der Ansprüche 1 bis 5, wobei die Vielzahl von Teilchen eine sphärische Form aufweist.

**7.** Rückstrahlende Folie nach einem der Ansprüche 1 bis 6, wobei die Rückflächenschicht ein Pigment beinhaltet.

**8.** Rückstrahlende Folie nach einem der Ansprüche 1 bis 7, wobei die Rückflächenschicht aus einem Klebstoff gebildet wird.

**Revendications**

**1.** Revêtement rétroréfléchissant comprenant :

une couche rétroréfléchissante ayant une pluralité d'éléments rétroréfléchissants sur une première face ;
une couche de face arrière prévue à l'opposé d'une face de la couche rétroréfléchissante sur le côté élément rétroréfléchissant, la couche de face arrière ayant une portion d'attachement attachée aux éléments rétroréfléchissants ;
une pluralité de particules agencées entre les éléments rétroréfléchissants et la couche de face arrière ; et
**caractérisé en ce que**
un vide est formé entre les éléments rétroréfléchissants et la pluralité de particules.

**2.** Revêtement rétroréfléchissant selon la revendication 1, dans lequel
un diamètre moyen de particules da des particules est une hauteur h des éléments rétroréfléchissants ou plus.

**3.** Revêtement rétroréfléchissant selon la revendication 1, dans lequel
un diamètre moyen de particules da des particules est inférieur à une hauteur h des éléments rétroréfléchissants.

**4.** Revêtement rétroréfléchissant selon l'une quelconque des revendications 1 à 3, dans lequel
un rapport da/h du diamètre moyen de particules da des particules sur la hauteur h des éléments rétroréfléchissants est de 0,40 ou plus et de 1,25 ou moins.

**5.** Revêtement rétroréfléchissant selon l'une quelconque des revendications 1 à 4, dans lequel
un rapport np/nv d'un nombre np de la pluralité de particules sur un nombre nv de vallées formées entre les éléments rétroréfléchissants adjacents l'un à l'autre est de 0,50 ou plus et de 5,00 ou moins.

**6.** Revêtement rétroréfléchissant selon l'une quelconque des revendications 1 à 5, dans lequel
la pluralité de particules a une forme sphérique.

**7.** Revêtement rétroréfléchissant selon l'une quelconque des revendications 1 à 6, dans lequel
la couche de face arrière inclut un pigment.

**8.** Revêtement rétroréfléchissant selon l'une quelconque des revendications 1 à 7, dans lequel
la couche de face arrière est formée d'un adhésif.

Fig. 1

Fig. 2

Fig. 3

Fig. 4

**EP 3 451 030 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3123693 B